# EUROPÄISCHE PATENTSCHRIFT

(11) **EP 1 060 113 B1**
(45) Veröffentlichungstag und Bekanntmachung des Hinweises auf die Patenterteilung: **23.10.2002**
(21) Anmeldenummer: 99900431.0
(22) Anmeldetag: 25.01.1999
(51) Int. Cl.: B65G 47/28, B65G 47/53, B65G 47/84

(54) **TRANSPORTVORRICHTUNG**
CONVEYOR
CONVOYEUR

(30) Priorität: 13.02.1998 CH 35698
(43) Veröffentlichungstag der Anmeldung: 20.12.2000
(73) Patentinhaber: Inmara AG, 8330 Pfäffikon (CH)
(72) Erfinder: REES, Daniel, CH-8006 Zürich (CH)
(74) Vertreter: Gachnang, Hans Rudolf
(86) Internationale Anmeldenummer: CH9900031
(87) Internationale Veröffentlichungsnummer: WO99041168

(56) Entgegenhaltungen:
- US-A- 3 294 215
- US-A- 5 692 594

## Beschreibung

Gegenstand der Erfindung ist eine Transportvorrichtung gemäss Oberbegriff des Patentanspruches 1.

In vielen Bereichen der Massenproduktion müssen Maschinen, welche am zu erzeugenden Artikel Bearbeitungen vornehmen, miteinander verknüpft werden. Sowohl die Verarbeitungsgeschwindigkeit als auch der gegenseitige Abstand der sich folgenden, der nächsten Bearbeitungsstation zugeführten Produkte kann variieren. Die meisten Bearbeitungsmaschinen setzen voraus, dass die Werkstücke in regelmässigen Abständen zugeführt werden. Diese Abstände können kleiner oder grösser sein als die Abstände der ankommenden Werkstücke.

Aus der Deutschen Patentschrift 19510649 ist eine Transportvorrichtung bekannt, bei der eine Gliederkette um drei Umlenkräder geführt wird, wovon eines der Umlenkräder zum Spannen der Kette und Ausgleichen von Längenunterschieden elastisch verschiebbar gelagert ist. Zwischen den beiden feststehenden Umlenkrädern wird die Kette durch zick-zack-förmiges Auseinanderziehen der Kettenglieder zeitweilig verkürzt. In den übrigen Bereichen, d.h. den beiden Trumen, zwischen jeweils dem feststehenden und dem beweglichen Umlenkrad verläuft die Kette in gestrecktem Zustand, d.h. die Mitnehmerglieder an jedem zweiten Gelenkglied der Kette liegen in grösstmöglichem Abstand. Zur Verringerung des Abstandes im Übergabebereich der zu transportierenden Werkstücke werden die zwischen den die Mitnehmer tragenden Gliederachsen aus der diese Achsen tragenden Kurvenbahn ausgelenkt. Die unterschiedliche Kettenlänge, welche sich durch die Auslenkung und Veränderung der Auslenkung ergibt, wird durch das dritte elastisch gelagerte Umlenkrad aufgefangen. In einer weiteren Ausführung der bekannten Vorrichtung tritt an Stelle des dritten elastisch gelagerten Umlenkrades eine Auslenkkurve, welche elastisch verstellbar ist und die Längenänderungen aufnimmt.
Diese bekannte Transportvorrichtung erfüllt die an Sie gestellten Anforderungen bezüglich der Zusammenführung der zugeführten Werkstücke auf gleich grosse Abstände. Bei hohen Transportgeschwindigkeiten neigt die Anlage allerdings dazu, in Schwingung zu geraten, was grosse Geräusche und zusätzlichen Verschleiss hervorruft.

Die Aufgabe der vorliegenden Erfindung besteht nun darin, eine Transportvorrichtung mit einer Gliederkette der genannten Gattung zu schaffen, welche die Nachteile der bekannten behebt und Schwingungen in der Kette im Bereich des Zusammenführens der Mitnehmer vermeidet.

Diese Aufgabe wird durch eine Führungsbahn mit den Merkmalen des Patentanspruches 1 gelöst. Vorteilhafte Ausgestaltungen der Erfindung sind in den abhängigen Ansprüchen definiert.

Die Aufteilung der die nicht Mitnehmer tragenden, Zwischengliederachsen führenden Kurvenbahn in eine Mehrzahl miteinander gelenkig verbundener Kurvenabschnitte verringert die Geräuschentwicklung und vereinfacht die Führung der die Mitnehmer tragenden Gliederkettenachsen.

Anhand eines illustrierten Ausführungsbeispieles wird die Erfindung näher erläutert. Es zeigen
- Figur 1: eine schematische Darstellung der Transportvorrichtung mit einem Zuführ- und einem Wegführband sowie dem bogenförmigen Bereich zum Egalisieren der Abstände zwischen den Werkstücken,
- Figur 2: eine Draufsicht auf die Bahnabschnittbahne in der Stellung für kleinen Werkstückabstand,
- Figur 3: eine Draufsicht auf die Lage der Transportkette in Figur 2,
- Figur 4: eine Draufsicht auf die Kurvenbahnen bei mittlerem Werkstückabstand,
- Figur 5: eine Draufsicht auf die Lage der Transportkette in Figur 4,
- Figur 6: eine Draufsicht auf die Kurvenbahn in der Stellung für grossen Werkstückabstand,
- Figur 7: eine Draufsicht auf die Lage der Transportkette in Figur 6 bei grossem Werkstückabstand,
- Figur 8: eine perspektivische Darstellung einiger Kettenglieder bei kleinem Werkzeugabstand (mitnehmerseitig),
- Figur 9: eine perspektivische Darstellung der Kettenglieder in Figur 8 von der Rückseite und

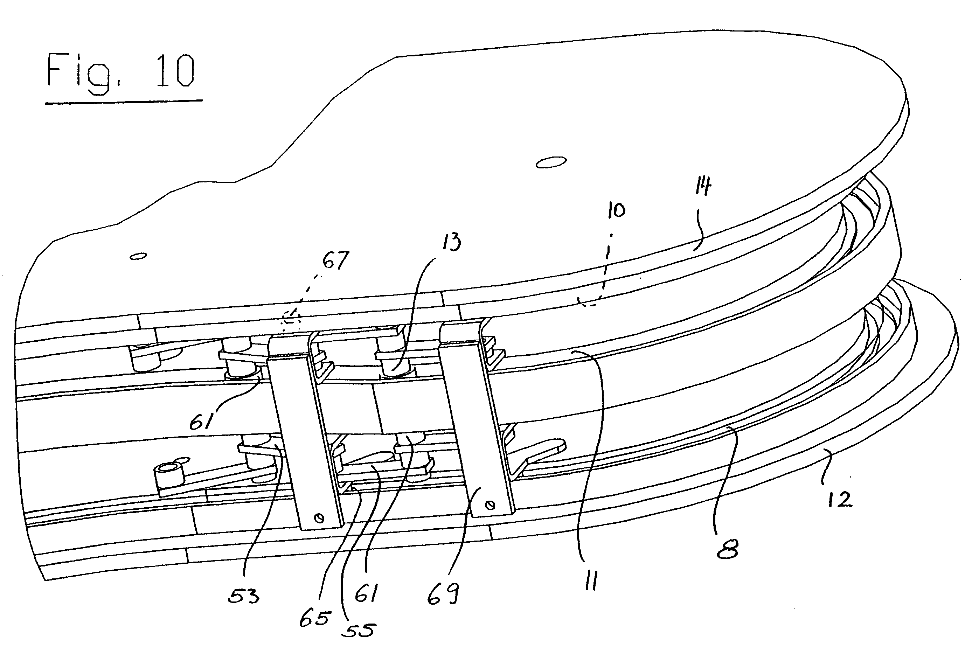

- Figur 10: eine perspektivische ausschnittsweise Darstellung zweier Mitnehmer zwischen Deck- und Bodenplatte eingesetzt.

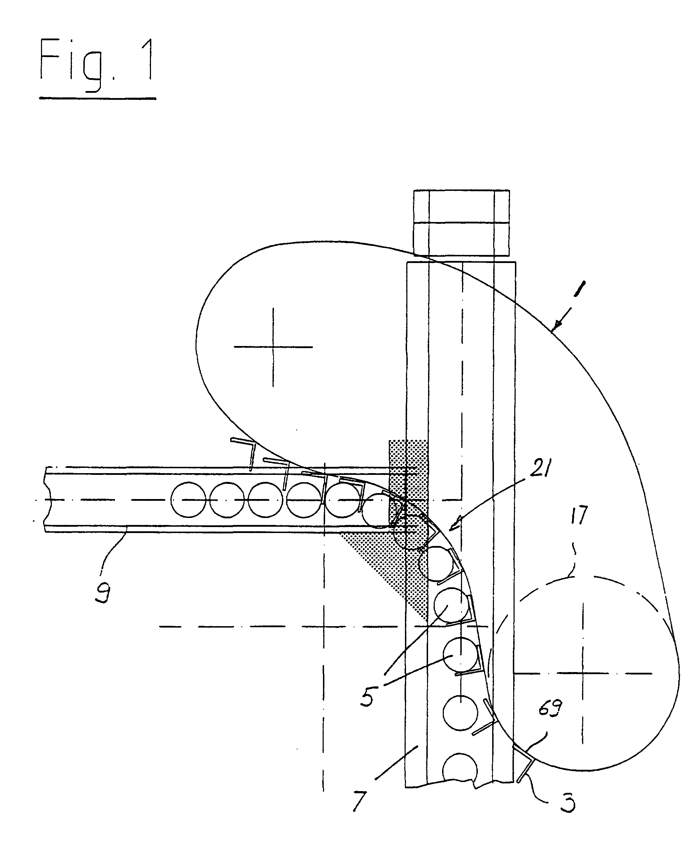

In Figur 1 ist mit Bezugszeichen 1 der Verlauf einer festen, linienförmigen Führungsbahn dargestellt, entlang welcher z.B. L-förmige Mitnehmer 3 geführt werden und Werkstücke 5 von einem Zuführband 7 auf ein Entnahmeband 9 überführen und während der Überführung den gegenseitigen Abstand der Werkstücke 5, welche auf dem Zuführband 7 in unregelmässigen Abständen eintreffen können, auf ein bestimmtes vorgebbares einheitliches Mass überführen. Die als durchgehende Linie in Figur 1 dargestellte Führungsbahn 1 steht stellvertretend für zwei sich gegenüberliegende Nuten 8,10, welche in einer Bodenplatte 12 und in einer Deckplatte 14 der Vorrichtung eingelassen sind.

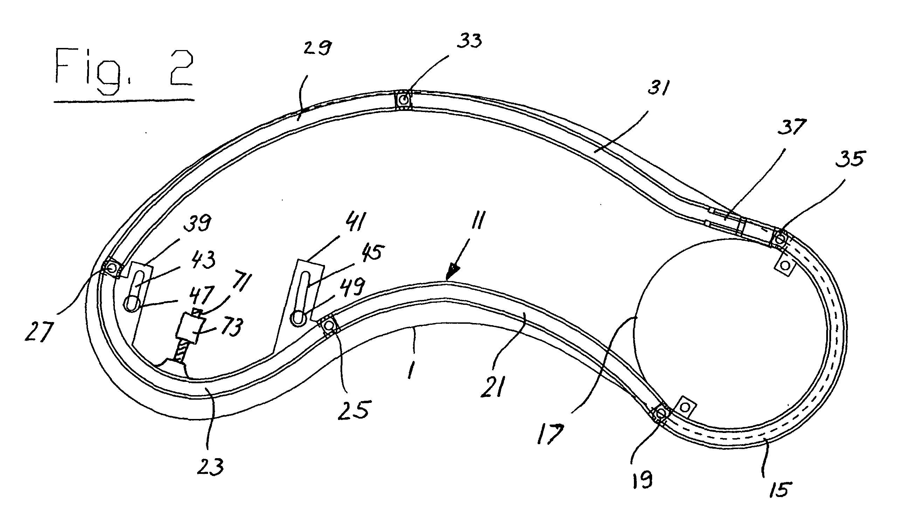

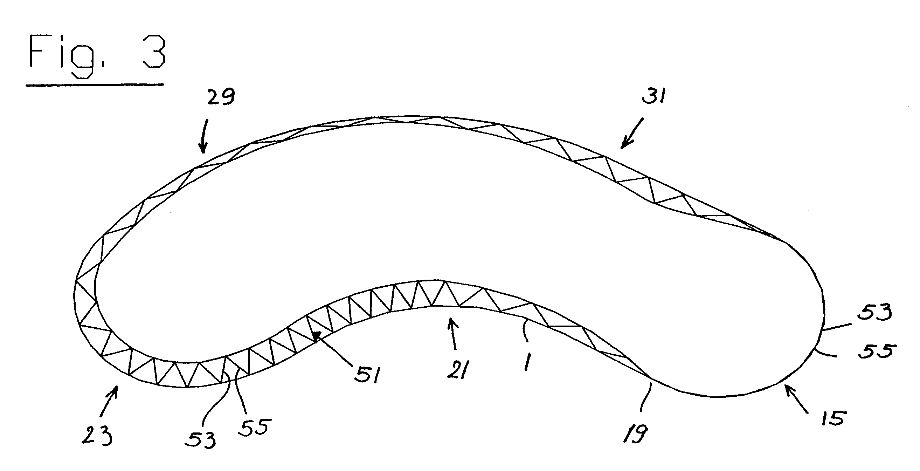

Die beiden Nuten 8,10 in der Boden- 12 und der Deckplatte 14 sind fest und unveränderlich. Zwischen den beiden Nuten 8,10 liegt eine weitere, im beschriebenen Beispiel aus fünf Abschnitten bestehende formvariable als Doppelnut ausgestaltete Kurvenbahn 11, welche dazu dient und ausgebildet ist, die zwischen den die Mitnehmer 3 tragenden Achsen 67 liegenden Zwischenachsen 13 zu führen. Die variable Kurvenbahn 11 umfasst einen kreisbogenförmigen ersten Bahnabschnitt 15, welcher ein Antriebsrad 17 zur Hälfte (ca. 180°) umschlingt. An den ersten Bahnabschnitt 15 schliesst sich, verbunden mit letzterem durch ein Gelenk 19 mit vertikal liegender Achse ein zweiter bogenförmiger Bahnabschnitt 21 an. Dieser erstreckt sich über den Übergabebereich der Werkstücke 5 vom Zulieferband 7 auf das Entnahmeband 9. An den zweiten Bahnabschnitt 21 schliesst der dritte Bahnabschnitt 23 an. Dieser ist wiederum durch eine Gelenkverbindung 25 mit dem zweiten Bahnabschnitt 21 und durch eine Gelenkverbindung 27 mit dem vierten Bahnabschnitt 29 verbunden. Geschlossen wird die Kurvenbahn 11 durch den fünften Bahnabschnitt 31, der über ein Gelenk 33 mit dem vierten Bahnabschnitt 29 verknüpft und durch ein Gelenk 35 an den ersten Bahnabschnitt 15 angeschlossen ist. Innerhalb des fünften Bahnabschnitts 31 ist vorzugsweise ein Schiebebereich 37 eingesetzt, welcher Längenveränderungen, die sich beim Auslenken und Ändern der Form der Kurvenbahn 11 ergeben, aufnehmen kann. Der dritte Bahnabschnitt 23 umfasst zwei Aufhängelaschen 39 und 41, an denen schlitzförmige Ausnehmungen 43,45 eingelassen sind. Die beiden Ausnehmungen 43,45 werden von Schrauben oder Führungsstiften 47,49 durchdrungen, welche den dritten Bahnabschnitt 23 an vorgegebener Stelle festhalten. In Figur 2 liegt der dritte Bahnabschnitt 23 in der ersten Extremstellung, d.h. der dritte Bahnabschnitt 23 ist ganz gegen das Kurveninnere geschoben (in der Figur nach oben) und die Schrauben 47,49 liegen am unteren Ende der schlitzförmigen Ausnehmung 43,45 an. In dieser Stellung ist auch der zweite Bahnabschnitt 21 im Uhrzeigersinn um das Gelenk 19 maximal nach oben geschwenkt. Gleiches trifft zu für den fünften Bahnabschnitt 31, der im Uhrzeigersinn um das Gelenk 35 in die Extremlage geschwenkt ist. Der vierte Bahnabschnitt 29 ist durch eine translatorische Bewegung im wesentlichen parallel nach hinten (in Fig. 2 nach oben) geschoben. Daraus ergibt sich folgender Grundriss einer Gliederkette 51, welche durch eine Vielzahl miteinander verbundener Kettenglieder 53 und 55 gebildet wird, wie sie in Figur 3 dargestellt ist. Im ersten Bahnabschnitt 15 liegen die Kettenglieder 53,55 völlig gestreckt auf dem Antriebsrad 17 auf. Beginnend beim Gelenkpunkt 19 weicht die variable Kurvenbahn 11 sukzessive von der festen Kurve 1 ab und die Kette 51 erhält eine Zickzackform, bei der die Winkel zwischen den einzelnen Kettengliedern 53 und 55 zunehmend kleiner werden, bis am Gelenkpunkt 25 beim Übergang in den dritten Bahnabschnitt 23 die Kette 11 zusehends wieder gestreckt wird, weil die variable Kurvenbahn 11 sich wieder der festen Führungsbahn 1 nähert. Ungefähr beim Gelenkpunkt 25 findet die Übergabe der Werkstücke 5 an das Entnahmeband 9 statt. In den Bahnabschnitten 29 und 31 wird die Kette 51 noch weiter gestreckt, bis sie die vollständige Streckung eingangs des Bahnabschnitts 15 beim Auflaufen auf das Antriebsrad 17 erreicht. Die Extremstellung des Bahnabschnitts 21 in den Figuren 1 und 2 erlaubt es, die Werkstücke 5 in kleinstmöglichem gegenseitigen Abstand zu transportieren.

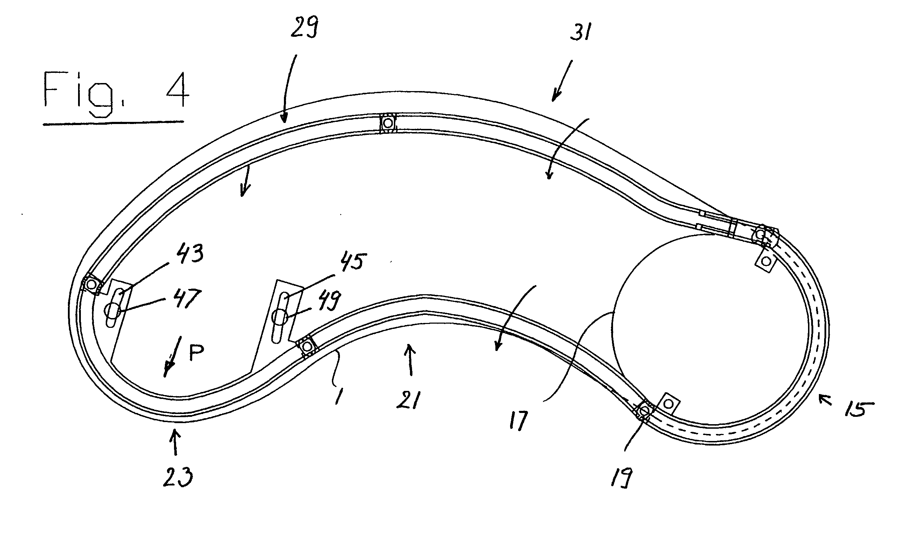

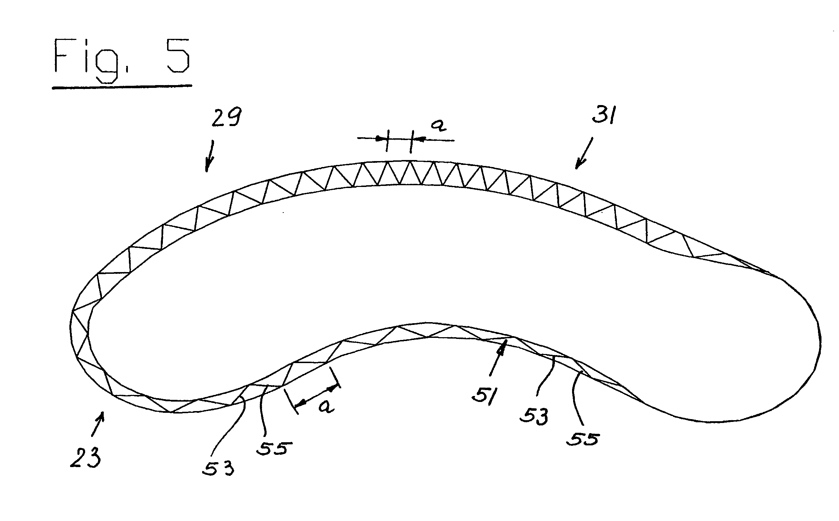

In den Figuren 4 und 5 wird der Abstand der Führungsbahnen 8,10 und 11 im Bahnabschnitt 21 kontinuierlich verkleinert. Die Änderung des gegenseitigen Abstands der Werkstücke 5 erfolgt wie nachfolgend aufgezeigt wird. Durch eine Verschiebung des Bahnabschnitts 23 in Richtung des Pfeiles P wird die verschiebbare Kurve 11 näher an die feste Führungsbahn 1 herangerückt. Dabei schwenkt der erste bewegliche Bahnabschnitt 21 im Gegenuhrzeigersinn um das Gelenk 19. Durch die Verschiebung des Bahnabschnitts 23 schwenkt der fünfte Bahnabschnitt 31 im Gegenuhrzeigersinn; der vierte Bahnabschnitt 29 verschiebt sich im wesentlichen parallel ebenfalls in Richtung des Pfeils P. Durch diese translatorische Lageänderung kommen die beiden Bahnen, die feste 1 und die bewegliche 11 mit den Führungsbahnen 8,10, näher beieinander zu liegen. Dies führt im Übergabebereich der Werkstücke 5, d.h. im Bereich des Bahnabschnitts 21 zu einer Streckung der Glieder 53 und 55 der Gliederkette 51 und dadurch zu einer Vergrösserung der Abstände a der Mitnehmer 3. Gleichzeitig verringern sich die Abstände a der Mitnehmer auf der gegenüberliegenden Seite der Kurve, d.h. in den Bahnabschnitten 29 und 31 (Figur 4). In der beschriebenen Stellung des dritten Bahnabschnittes 23 liegen nun die Schrauben 47,49 etwa in der Mitte der schlitzförmigen Ausnehmungen 43 und 45 (Figur 5).

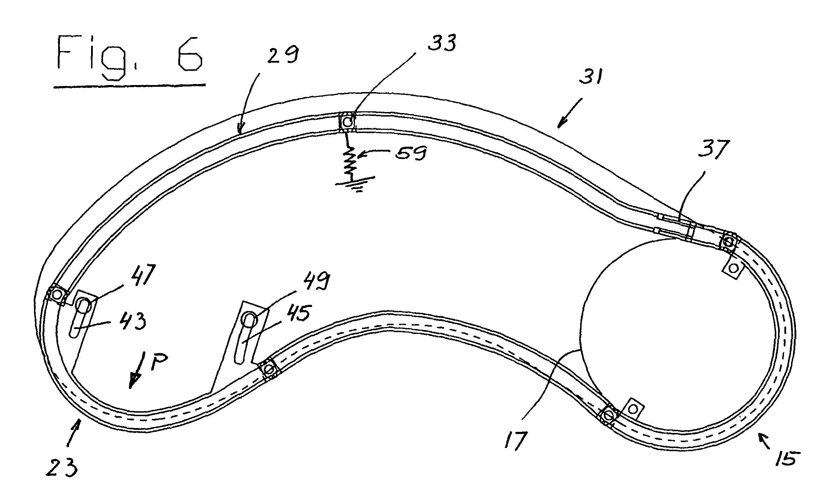

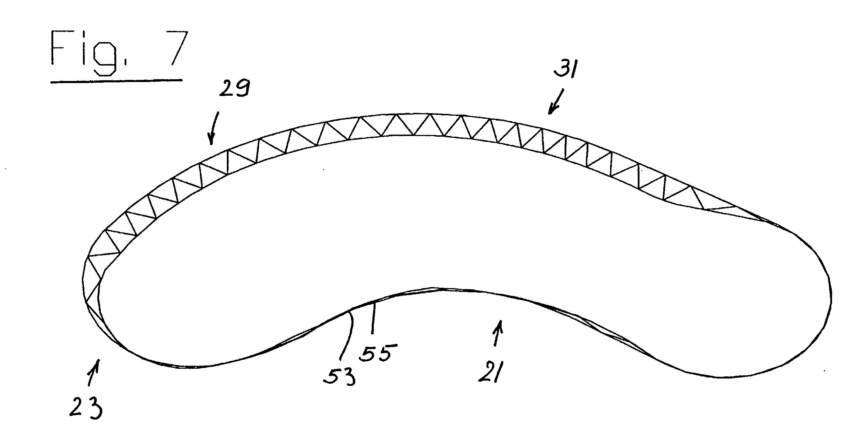

Wird der dritte Bahnabschnitt 23 gemäss Figur 6 noch weiter in Richtung des Pfeils P verschoben, bis die Schrauben 47 und 49 am oberen Ende der Ausnehmungen 43,45 liegen, werden die Kettenglieder 53,55 im Abschnitt 21 in annähernd vollständig gestreckte Lage überführt (Figur 7) und folglich auch der Abstand a zwischen den einzelnen Mitnehmern 3 auf den grösstmöglichen Wert gebracht. Im Gegensatz dazu, verringert sich der Abstand der Mitnehmer 3 auf der gegenüberliegenden Seite im Bereich der Bahnabschnitte 29 und 31.

Da die Verschiebung des Bahnabschnitts 23 und die Verschwenkung der übrigen beweglichen Bahnabschnitte 21,29 und 31 nicht vollständig ohne Längenänderung der gesamten beweglichen Kurvenbahn 11 möglich ist, ist beispielsweise innerhalb des fünften Bahnabschnitts 31 eine Schiebestelle 57 vorgesehen, welche diese Längenänderung, sie liegt innerhalb von Millimetern, ausgleicht. Das Gelenk 33, welches die Bahnabschnitte 29 und 31 verbindet, wird mittels einer Feder 59 gegen das Innere der Kurvenbahn 11 gezogen. Dadurch wird die Kurvenbahn 11 zu einem im wesentlichen starren Gebilde.

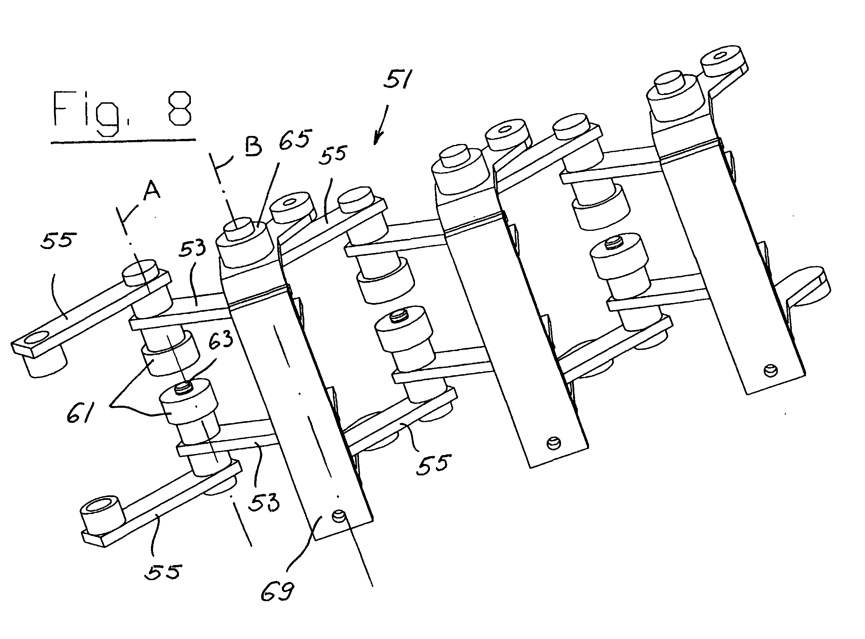

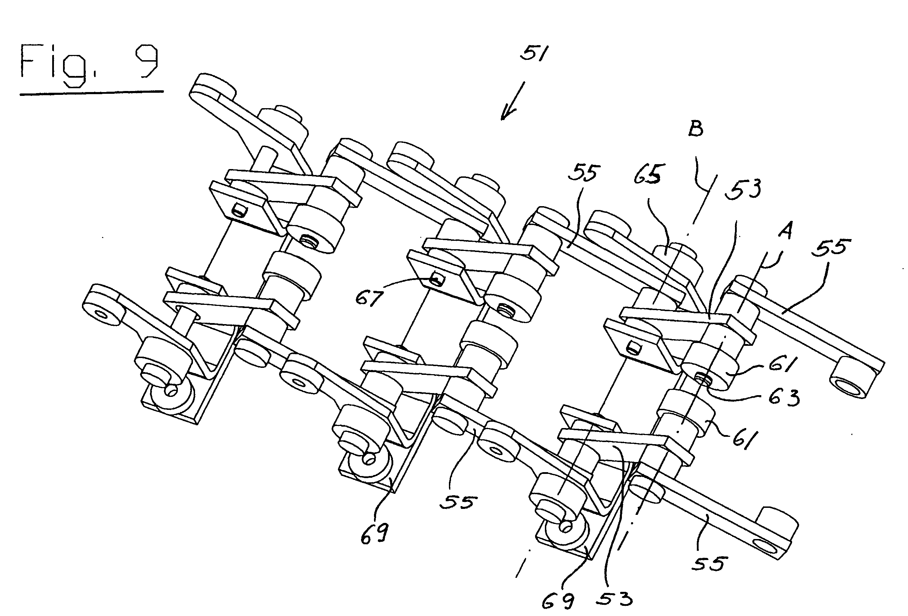

Die bewegliche Kurvenbahn 11 bzw. deren starrer Bahnabschnitt 15 und deren bewegliche Bahnabschnitte 21,23,29 und 31 weisen vorzugsweise einen doppel-Tförmigen Querschnitt auf, in welchen von oben und von unten Lenkrollen 61 eingreifen, die um eine Achse A drehbar an Wellen 63 befestigt sind. Die Wellen 63 verbinden die Kettengliederpaare 53 und 55. Auf einer gemeinsamen Achse B sind Führungsrollen 65 drehbar gelagert und werden von Achszapfen 67 getragen, welche die gegenüberliegenden Enden der Kettenglieder 53,55 verbinden. Auf den Wellen 67 sind zudem die Mitnehmer 3 befestigt und zwar an Verbindungsplatten 69, welche beide Ketten 51, bestehend aus den Kettengliedern 53,55 miteinander verbinden (Figuren 8 und 9). Die Rollen 65 auf den Achsen B greifen in Führungsnuten an den beiden festen Führungsbahnen 1 ein.

Die erfindungsgemässe Transportvorrichtung weist einen sehr einfachen Aufbau auf und die Abstände a zwischen den sich folgenden Werkstücken 5 lassen sich auf einfache Weise durch eine Verschiebung des beweglichen Bahnabschnitts 23 einstellen. Dazu kann eine Spindel 71 dienen, die von Hand oder durch einen Servomotor 73 angetrieben wird. Die Verstellung der Abstände zwischen den Mitnehmern 3 lässt sich stufenlos vornehmen und kann - falls notwendig - während des Betriebs geändert werden (vgl. Figur 2).

## Patentansprüche

1. Transportvorrichtung mit einer festen in sich geschlossenen Führungsbahn (1) für eine endlose Transportkette (51) mit Mitnehmern (3), deren gegenseitiger Abstand (a) entlang der Führungsbahn (1) verstellbar ist, umfassend die unveränderbare Führungsbahn (1), an welcher Führungsrollen (65) auf Tragachsen (B) für die Mitnehmer (3) geführt sind, und eine lageveränderbare, Zwischenachsen (A) mit Lenkrollen (61) führende Kurvenbahn (11) die eine Mehrzahl schwenk- oder verschiebbarer Bahnabschnitte (21,23,29,31) umfasst, und ein Antriebsrad (17) zum Antrieb der Transportkette (51), **dadurch gekennzeichnet, dass** die lageveränderbare Kurvenbahn (11) einen ersten, feststehenden, das einzige Antriebsrad (17) umschlingenden Bahnabschnitt (15) umfasst und dass die Enden der schwenk- oder verschiebbaren Bahnabschnitte (21,23,29,31) mittels Gelenken (25,27,33) gegenseitig und mittels Gelenken (19,35) mit dem feststehenden Bahnabschnitt (15) miteinander verbunden sind und die gesamtheit der Bahnabschnitte (15,21,23,29,31) die geschlossene lageveränderbare Kurvenbahn (11) bilden.

2. Transportvorrichtung nach Anspruch 1, **dadurch gekennzeichnet, dass** am ersten Bahnabschnitt (15) gelenkig der zweite Bahnabschnitt (21), daran der dritte (23) und an diesen der vierte Bahnabschnitt (29) anschliessen und dass die Führungsbahn (11) durch den fünften Bahnabschnitt (31), dessen eines Ende mit dem ersten Bahnabschnitt (15) verbunden ist, geschlossen wird.

3. Transportvorrichtung nach einem der Ansprüche 1 oder 2, **dadurch gekennzeichnet, dass** der dritte, zwischen dem zweiten (21) und vierten Bahnabschnitt (29) liegende Bahnabschnitt (23) im wesentlichen rechtwinkelig zu einer die beiden Enden des dritten Bahnabschnitts (23) verbindenden Geraden verschiebbar ist.

4. Transportvorrichtung nach Anspruch 3, **dadurch gekennzeichnet, dass** der zwischen dem feststehenden ersten Bahnabschnitt (15) und dem im wesentlichen parallel verschiebbaren dritten Bahnabschnitt (23) liegende zweite Bahnabschnitt (21) um das ortsfeste Gelenk (19) am ersten Bahnabschnitt (15) schwenkbar angelenkt ist.

5. Transportvorrichtung nach einem der Ansprüche 1 bis 4, **dadurch gekennzeichnet, dass** das Gelenk (33) zwischen dem vierten (29) und dem fünften Bahnabschnitt (31) durch ein in der von den Bahnabschnitten (15,21,23,29,31) bestimmten Ebene liegendes, elastisches Zugelement (59) gegen das Zentrum der Führungsbahn (11) verschiebbar federbelastet wird.

6. Transportvorrichtung nach einem der Ansprüche 1 bis 5, **dadurch gekennzeichnet, dass** der dritte Bahnabschnitt (23) durch einen von Hand oder motorisch betätigbaren Antrieb (71,73) verschiebbar ist.

7. Transportvorrichtung nach Anspruch 6, **dadurch gekennzeichnet, dass** beim Verschieben des dritten Bahnabschnittes (23) der zweite (21) und der vierte Bahnabschnitt (29) um Gelenke (19,33) an den Enden des ersten Bahnabschnitts (15) im Uhrzeigersinn bzw. im Gegenuhrzeigersinn geschwenkt werden.

8. Transportvorrichtung nach einem der Ansprüche 1 bis 7, **dadurch gekennzeichnet, dass** in mindestens einem der Bahnabschnitte (21,29,31) ein Schiebebereich (37) zum Ausgleich von Längenänderungen der Kurvenbahn (11) ausgebildet ist.

9. Transportvorrichtung nach einem der Ansprüche 1 bis 8, **dadurch gekennzeichnet, dass** die Kurvenbahn (11) zwischen zwei die Führungsbahnen (1) bildenden Nuten (8,10) angeordnet ist.

10. Transportvorrichtung nach Anspruch 9, **dadurch gekennzeichnet, dass** die Kurvenbahn (11) einen doppel-T-förmigen Querschnitt aufweist, in welche die Lenkrollen (61) an den mit den Mitnehmern (3) verbundenen Kettengliedern (53,55) der Transportkette (51) eingreifen und abwälzen.

## Claims

1. Conveying apparatus, having a fixed guide track (1), which is closed upon itself, for guiding an endless conveyor chain (51) with entrainment means (3), the mutual spacing (a) between said means being adjustable along the guide track (1), said apparatus including the invariable guide track (1), along which guide rollers (65) are guided on bearing axes (B) for the entrainment means (3), and a position-variable cam track (11), which guides intermediate axes (A) with steering rollers (61) and includes a plurality of pivotable or displaceable track portions (21, 23, 29, 31), includes a drive wheel (17) for driving the conveyor chain (51), **characterised in that** the position-variable cam track (11) includes a first stationary track portion (15) which loops around the single drive wheel (17), and **in that** the ends of the pivotable or displaceable track portions (21, 23, 29, 31) are mutually interconnected by means of pivot joints (25, 27, 33) and connected to the stationary track portion (15) by means of pivot joints (19, 35), and all of the track portions (15, 21, 23, 29, 31) form the closed, position-variable cam track (11).

2. Conveying apparatus according to claim 1, **characterised in that** the second track portion (21) communicates pivotally with the first track portion (15), the third track portion (23) communicates with said second portion, and the fourth track portion (29) communicates with said third portion, and **in that** the guide track (11) is closed by the fifth track portion (31), one end of which is connected to the first track portion (15).

3. Conveying apparatus according to one of claims 1 or 2, **characterised in that** the third track portion (23), which lies between the second track portion (21) and the fourth track portion (29), is displaceable substantially at right angles to a straight line which joins the two ends of the third track portion (23).

4. Conveying apparatus according to claim 3, **characterised in that** the second track portion (21), which lies between the stationary first track portion (15) and the substantially parallel-displaceable third track portion (23), is mounted so as to be pivotable about the non-mobile pivot joint (19) on the first track portion (15).

5. Conveying apparatus according to one of claims 1 to 4, **characterised in that** the pivot joint (33) is spring-loaded between the fourth track portion (29) and the fifth track portion (31) by a resilient tensioning element (59), which lies in the plane determined by the track portions (15,21,23,29,31), so as to be displaceable towards the centre of the guide track (11).

6. Conveying apparatus according to one of claims 1 to 5, **characterised in that** the third track portion (23) is displaceable by a drive (71, 73) which is actuatable by hand or by motor.

7. Conveying apparatus according to claim 6, **characterised in that**, during displacement of the third track portion (23), the second track portion (21) and the fourth track portion (29) are pivoted about pivot joints (19, 33) at the ends of the first track portion (15) in a clockwise direction and respectively in an anticlockwise direction.

8. Conveying apparatus according to one of claims 1 to 7, **characterised in that** a slidable region (37) is provided in at least one of the track portions (21,29,31) to compensate for longitudinal changes in the cam track (11).

9. Conveying apparatus according to one of claims 1 to 8, **characterised in that** the cam track (11) is disposed between two grooves (8, 10) which form the guide tracks (1).

10. Conveying apparatus according to claim 9, **characterised in that** the cam track (11) has a double-T-shaped cross-section, in which the steering rollers (61) engage and roll on the chain links (53, 55) of the conveyor chain (51) which are connected to the entrainment means (3).

## Revendications

1. Convoyeur comprenant une glissière fixe en boucle fermée (1) pour une chaîne transporteuse sans fin (51) munie de tocs d'entraînement (3) dont l'espacement (a) le long de la glissière de guidage (1) est réglable, qui est composé de la glissière de guidage (1) fixe qui guide des galets de guidage (65) montés sur des axes (B) pour les tocs d'entraînement (3) et d'une glissière curviligne (11) dont la position peut être modifiée, qui guide des axes intermédiaires (A) munis de galets de guidage (61) et qui compte plusieurs segments de glissière pouvant pivoter ou être déplacés (21, 23, 29, 31) et une roue d'entraînement (17) pour entraîner la chaîne transporteuse (51), **caractérisé en ce que** la glissière incurvée (11) comprend un premier segment de glissière fixe (15) entourant l'unique roue d'entraînement (17), **en ce que** les extrémités des segments de glissière pouvant pivoter ou être déplacés (21, 23, 29, 31) sont reliées entre elles au moyen d'articulations (25, 27, 33) et au segment de glissière fixe (15) au moyen d'articulations (19, 35), et **en ce que** la totalité des segments de glissière (15, 21, 23, 29, 31) forme la glissière curviligne (11) fermée dont la position peut être modifiée.

2. Convoyeur selon la revendication 1, **caractérisé en ce que** le deuxième segment de glissière (21) auquel se raccordent les troisième (23) et quatrième (29) segments de glissière est relié de manière articulée au premier segment de glissière (15), et **en ce que** la glissière de guidage (11) est fermée par le cinquième segment de glissière (31) dont l'une des extrémités est reliée au premier segment de glissière (15).

3. Convoyeur selon la revendication 1 ou 2, **caractérisé en ce que** le troisième segment de glissière (23) qui est situé entre le deuxième (21) et le troisième (29) segment de glissière peut être déplacé essentiellement perpendiculairement à une droite reliant les deux extrémités du troisième segment de glissière (23).

4. Convoyeur selon la revendication 3, **caractérisé en ce que** le deuxième segment de glissière (21) situé entre le premier segment de glissière (15) fixe et le troisième segment de glissière (23) pouvant être déplacé essentiellement parallèlement est fixé de manière articulée au premier segment de glissière (15), de façon à pouvoir pivoter autour de l'articulation fixe (19).

5. Convoyeur selon l'une des revendications 1 à 4, **caractérisé en ce que** l'articulation (33) entre le quatrième (29) et le cinquième segment de glissière (31) est soumise à l'action d'un élément de traction élastique (59) situé dans le plan délimité par les segments de glissière (15, 21, 23, 29, 31), qui la tire vers le milieu de la glissière de guidage (11).

6. Convoyeur selon l'une des revendications 1 à 5, **caractérisé en ce que** le troisième segment de glissière (23) peut être déplacé à l'aide d'un entraînement (71, 73) motorisé ou pouvant être actionné à la main.

7. Convoyeur selon la revendication 6, **caractérisé en ce que**, lors du déplacement du troisième segment de glissière (23), le deuxième (21) et le quatrième segment de glissière (29) pivotent respectivement dans le sens des aiguilles d'une montre et dans le sens inverse des aiguilles d'une montre autour d'articulations (19, 33) situées aux extrémités du premier segment de glissière (15).

8. Convoyeur selon l'une des revendications 1 à 7, **caractérisé en ce qu'**une zone coulissante (37) est ménagée dans au moins l'un des segments de glissière (21, 29, 31), afin de compenser des variations en longueur de la glissière curviligne (11).

9. Convoyeur selon l'une des revendications 1 à 8, **caractérisé en ce que** la glissière curviligne (11) est placée entre deux rainures (8, 10) formant la glissière de guidage (1).

10. Convoyeur selon la revendication 9, **caractérisé en ce que** la glissière curviligne (11) présente une section transversale en forme de double T, dans laquelle les galets de guidage (61) roulent en prenant appui et sont en prise avec les maillons (53, 55) de la chaîne transporteuse (51) qui sont reliés aux tocs d'entraînement (3).
